Europäisches Patentamt

European Patent Office

Office européen des brevets

(11) Publication number: **0 439 270 A2**

# EUROPEAN PATENT APPLICATION

(21) Application number: **91300265.5**

(51) Int. Cl.⁵: **B30B 1/26**, F16C 3/28

(22) Date of filing: **15.01.91**

(30) Priority: **17.01.90 JP 7903/90**

(43) Date of publication of application:
**31.07.91 Bulletin 91/31**

(84) Designated Contracting States:
**DE FR GB**

(71) Applicant: **Aida Engineering Ltd.**
**2-10, Ohyama-cho**
**Sagamihara-shi, Kanagawa-ken(JP)**

(72) Inventor: **Imanishi, Shozo**
**12-21, Hikarigaoka, 1-chome**
**Sagamihara-Shi Kanagawa-Ken(JP)**

(74) Representative: **Clifford, Frederick Alan et al**
**MARKS & CLERK 57/60 Lincoln's Inn Fields**
**London WC2A 3LS(GB)**

(54) **Crank driving device for press.**

(57) The crank driving device for press according to the present invention is designed in serial type eccentric structure, in which the eccentric element of crank shaft and the eccentric mechanism to give the second eccentricity are separated in axial direction of the crank shaft. Specifically, in each of the eccentric holes of a pair of rotating bodies supported synchronously and rotatably on basic axial line, each of the shaft ends of crank shaft is relatively rotatably and relatively displaceably engaged in axial direction. The eccentricity is adjusted by relatively rotating crank shaft and rotating bodies, and the relative angle of crank shaft and rotating bodies are maintained at constant value by connecting means after adjustment.

Therefore, the slide strokes can be easily adjusted as desired while pressure speed is maintained at constant level by adjusting the eccentricity of crank unit and eccentric holes, and this contributes to compact design of the equipment.

EP 0 439 270 A2

## CRANK DRIVING DEVICE FOR PRESS

### BACKGROUND OF THE INVENTION

#### (1) Field of the invention

The present invention relates to a crank driving device for press.

#### (2) Description of the prior art

In general, press equipment is driven by a so-called crank device. Specifically, a crank shaft is rotatably supported on a machine body. The portion with larger diameter of the connecting rod is engaged with its eccentric element, and the portion with smaller diameter is connected to the slide. When the slide is movably guided along the machine upward and downward, the slide can be moved up or down by rotating the crank shaft through the means as commonly practiced.

If upper die is placed face-to-face and fixed to the slide and lower die to bolster, which is a part of the machine, press operation can be achieved by a pair of these dies. The length of the stroke of upward and downward movements of the slide is twice as long as the eccentricity of the crank.

To obtain higher productivity, the number of the strokes of press should be increased. However, the speed of the slide increases, and this leads to the higher vibration and noise of the press. Also, the press operation itself is adversely affected as the so-called drawing speed is increased.

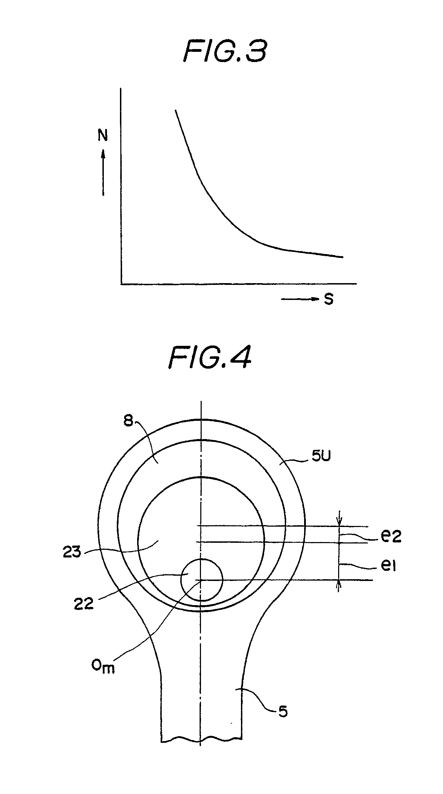

Because average speed of the slide can be given by the product of the stroke length (S) and the number of revolutions per minute (N) of the crank shaft, which is the number of the strokes of press. Thus, the product SN is an important reference factor in designing a press. When the value of SN is constant, the relationship between the stroke length (S) and the number of revolutions (N) can be given as shown in Fig. 3.

It is evident from this figure that the stroke length (S) should be shortened for the purpose of increasing the number of revolutions (N). As the result, the structure having variable stroke length (S) has been proposed in the past. This is given in Fig. 4.

The center of the crank shaft 22 is at Om, and the eccentric element 23 is eccentric from Om by $e_1$. Eccentric ring 8 is engaged in the eccentric element 23. To the eccentric element 23, the eccentric ring 8 is eccentric by $e_2$. With the eccentric ring 8, the portion with larger diameter 5U of the connecting rod 5 is engaged. By rotating the eccentric ring 8 relative to the crank shaft 22, the relative eccentricity of the eccentric ring 8 to the center (Om) of the crank shaft 22 can be changed within the range of maximum value ($e_1 + e_2$) to minimum value ($e_1 - e_2$). Therefore, the maximum value for stroke length is 2 ($e_1 + e_2$), and the minimum value is 2 ($e_1 - e_2$). Here, press machine is operated with the eccentric ring 8 fixed on the eccentric element 23 by the means as commonly known.

The examples using such mechanism are described in the Japanese Provisional Patent Publication No. 59-92200, the Japanese Provisional Utility Model Publication No. 56-34698, the West German Patent Publication No. 3112382.1-14, etc.

#### (3) Problems to be solved by the invention

Nevertheless, the conventional type multi-layer eccentric structure has the following problems:

(1) The eccentric ring 8 is engaged with the crank unit 23, and the upper end 5U (portion with larger diameter) of connecting rod 5 is engaged with it. Because press load is also applied on the eccentric ring 8, it must have considerable mechanical strength. Accordingly, the dimensions in radial direction are too long, and this hinders compact design of the press.

(2) The longer radial dimension of multi-layer eccentric structure also directly leads to the increase of inertia. As the result, larger power transmission devices such as main gear must be larger, and this decreases in turn the rotation control. Moreover, the upper end 5U of the connecting rod 5 has larger diameter, and the peripheral speed is increased. This requires more sturdy construction to cope with higher acceleration. On the other hand, this hinders high-speed operation of the machine.

(3) The multi-layer eccentric structure is accommodated in the so-called crown chamber of the press. Because of the recent increased requirements in the industry such as automation, diversification of the processes, etc., crown chamber is more and more densely mounted. This imposes strong restriction on larger design of the press or on the device modification or layout.

(4) The multi-layer eccentric structure requires the adjusting means, which adjusts relative angle between the eccentric element 23 of the crank shaft 22 and the eccentric ring 8 and strictly maintains the relative angle once adjusted. This further aggravates the above problems (1) - (3). The adjustment in a narrow crown chamber causes much difficulties and inconveniences, and the demands for the high efficiency production of diversified products cannot be satisfied.

## SUMMARY OF THE INVENTION

(1) The object of the present invention is to offer a crank driving device for press in compact size and with lesser shock, by which it is possible to reduce the cost through simplification of the facilities and to produce high-precision products at high efficiency.

(2) Means to solve the problems

The above object can be attained by the serial type eccentric structure, in which the eccentric element of the crank shaft and the eccentric device to give the second eccentricity are separated in axial direction of the crank shaft.

Describing in detail, the crank driving device for press according to the present invention comprises:

a crank shaft with eccentric element engaged with upper end of a connecting rod, a pair of rotating bodies supported synchronously and movably on basis axial line and having eccentric holes being eccentric to basic axial line, and connecting means;

characterized in that each end of said crank shaft is rotatably and displaceably engaged in axial direction in each of the eccentric holes of said rotating bodies, and that said connecting means is arranged in such manner that relative rotation of crank shaft and rotating body is allowed when eccentricity is adjusted and relative angle between crank shaft and rotating body is maintained at constant value after the eccentricity adjustment.

(3) Operation and effect

In the equipment according to the present invention, when the connecting means is kept in locked state and the rotating body is rotated around the basic axial line by a driving motor, the rotating force is transmitted to the crank shaft through the connecting means.

In this case, crank shaft makes eccentric movement because it is engaged in the eccentric hole of the rotating body, and the connecting rod engaged with the eccentric element also makes eccentric movement around the axial line of the crank shaft. As the result, the connecting rod is moved up and down by the stroke based on these eccentric movements.

If the stroke is to be decreased to perform shockless operation while maintaining SPM at constant level and maintaining the productivity, the driving motor is stopped or braked to bring the rotating body to a standstill. Then, the connecting means is released, and the connection between the rotating body and the crank shaft is disengaged. By changing the relative angle between the rotating body and the crank shaft, overall eccentricity is adjusted.

When the connecting means is brought into locked state again, the connecting rod, i.e. the slide, can be moved up or down by the overall eccentricity as already adjusted.

The equipment according to the present invention is a serial type crank driving device, which comprises a crank shaft, a pair of rotating bodies having eccentric holes, and connecting means for connecting and separating crank shaft and rotating bodies, and it is characterized in that the press speed is kept at constant level by adjusting the eccentricity between crank unit and eccentric hole and the slide stroke is adjusted as desired. Therefore, the disadvantages of the conventional type equipment such as large-size multi-layer eccentric structure, the difficult adjustment, excessive increase of peripheral speed, etc. are eliminated, and the conveniences for compact design of press and accurate and easy adjustment of slide stroke are provided. As the result, the new equipment according to the present invention can meet the current requirements of the industry such as the improvement of productivity, high-precision machining, production of diversified products and the increase of automated processes.

## BRIEF DESCRIPTION OF THE DRAWINGS

Fig. 1 is a cross-sectional view of an embodiment of the present invention;

Fig. 2 is a drawing to explain the principle of eccentricity adjustment of the above equipment;

Fig. 3 shows the relationship between stroke and press speed; and

Fig. 4 is a schematical drawing of a conventional type crank driving device of multi-layer eccentric structure.

In the figures, 1 represents a machine frame, 2 a pinion shaft, 5 a connecting rod, 5U an upper end, 10 a crank driving device, 11 a rotating body, 12 an eccentric hole, 21 a crank shaft, 22L and 22R lateral ends, 23 an eccentric element, 30 connecting means, 31 a gear unit, 32 an internal gear, and 33L and 33R cylinders.

## DETAILED DESCRIPTION OF THE PREFERRED EMBODIMENT

In the following, an embodiment of the present invention will be described in connection with the drawings.

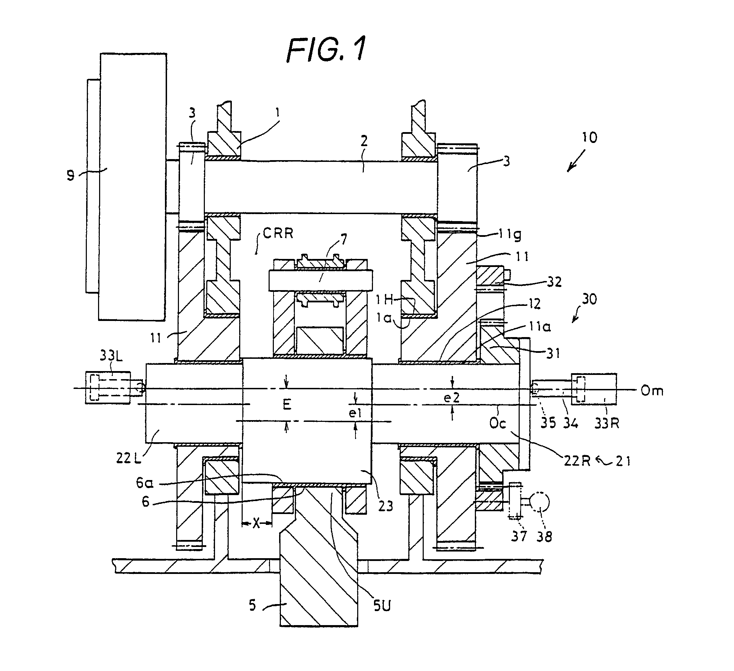

As shown in Fig. 1, the crank driving device for press 10 comprises a pair of rotating bodies 11, a crank shaft 21 and connecting means 30, and it is designed in a new serial type eccentric structure in contrast to the conventional type multi-layer eccentric structure.

In Fig. 1, 1 is a machine frame, which forms a crown chamber CRR. 2 represents a pinion shaft provided with pinion gears 3 and 3 on both sides and is rotatably supported on the machine frame 1.

The pinion shaft 2 is connectably and separably connected on a flywheel 9, rotated by a driving motor, by a clutch-brake unit. These components make up a so-called prime moving mechanism.

The rotating body 11 is rotatably supported on a hole 1H of the machine frame 1 around the basic axial line Om through a bush 1a and is provided with an eccentric hole 12 with the eccentricity $e_2$. The gear 11g furnished on outer periphery is engaged with a pinion gear 3. When the pinion shaft 2 is rotated, a pair of the rotating bodies 11 provided on left and right are synchronously rotated around basic axial line Om within the hole 1H. In this case, the eccentric hole 12 is eccentrically rotated with eccentricity $e_2$ around the basic axial line Om.

This rotating body corresponds to the main gear in the conventional type structure. Therefore, it is not related to large size facility.

The crank shaft 21 is provided with an eccentric element 23 with eccentricity $e_1$ at the center. In this eccentric element 23, the upper end 5U (with the hole 6) of the connecting rod 5 is engaged. When it is rotated around the axial line Oc of the crank shaft 21, the connecting rod 5 makes upward and downward movement based on the eccentricity $e_1$. This crank shaft 21 has the same structure as the crank shaft of the press, in which stroke adjustment by eccentric operation is not performed. Accordingly, large-size facility is not involved.

Both lateral ends 22R and 22L of the crank shaft 21 are rotatably and axially displaceably engaged in each of the eccentric holes 12 and 12 of the rotating bodies 11 and 11 provided at left and right through the bushes 11a. Displacement tolerance is X as shown in Fig. 1. Namely, the eccentric element 23 is longer than the bush 6a (connecting rod 5), which is slidably engaged.

7 is a drive unit for dynamic balance weight of the slide.

Next, the connecting means 30 is the means for selecting the rotating bodies 11 and crank shaft 21 synchronously and rotatably or relatively and rotatably. The connecting means 30 comprises an internal gear 32 fixed on the right rotating body 11, a gear unit 31 concentrically fixed on the right lateral end 22R of the crank shaft 22, and cylinders 33L and 33R (piston 34 and roller 35) alternately pushing left and right shaft ends 22L and 22R. If the cylinder 33 is operated and the shaft end 22L is pushed rightward in the eccentricity adjustment ($e_2$), internal gear 32 and gear unit 31 are disengaged, and this allows relative rotation of crank shaft 21 and rotating body 11. On the other hand, if the cylinder 33R is operated instead of the cylinder 33L after the eccentricity adjustment, gear unit 31 is engaged with internal gear 32, thereby maintaining the relative angle of the components 11 and 21 at a constant value. In Fig. 1, the number of the teeth of internal gear 32 is more than that of the gear unit 31, whereas these may be equal to each other.

In this case, the relative rotation of the components 11 and 21 can be accomplished by various methods such as the method to fix the gear unit 31 (crank shaft 21) unrotatably after separating it from internal gear 32 and to rotate the rotating body 11 only by the predetermined angle, or the method to rotate the adjusting gear (shown by two-dot chain line in Fig. 1) 37 newly engaged with gear unit 31 after gear unit 31 is separated.

The upward and downward strokes of connecting rod 5 are determined by overall eccentricity E ($e_1 \pm e_2$) to basic axial line Om. This adjustment can be achieved for each minimum resolution proportional to the number of teeth of the gear unit 31. The eccentricity $e_1$ is variable to the overall eccentricity E.

Because the connecting means 30 is provided on the right side, the rigidity (thickness) of the rotating body 11 on the right side is higher than that of the left rotating body.

Next, description is given on the operation of this embodiment.

In case it is desired to increase the productivity by reducing the shock on dies and by increasing SPM, or in case slide speed is to be decreased by adapting the machining mode while maintaining SPM at constant value, the stroke should be reduced.

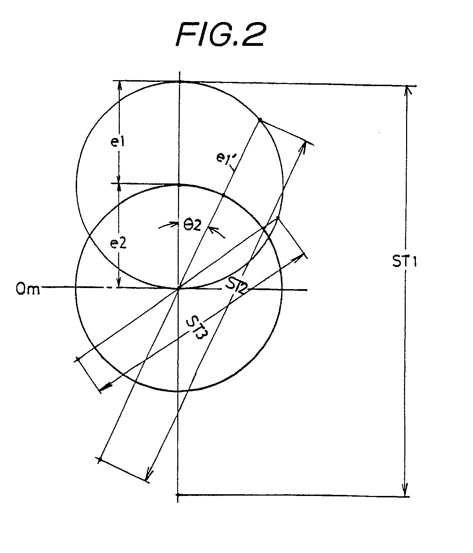

As shown in Fig. 2, in case the axial line Oc of the crank shaft 21 is engaged in the eccentric hole 12 with maximum eccentricity $e_2$ relative to the basic axial line Om, the stroke ST1 of the slide is twice as big as the overall eccentricity E ($e_1 + e_2$).

To adjust the slide stroke, the cylinder 33R of the connecting means 30 is released, and the cylinder 33L is pushed. Then, the crank shaft 21 is displaced rightward in the eccentric hole 12 in Fig. 1. As the result, the gear unit 31 integrated with the crank shaft 21 is separated from the internal gear 32, which is integrated with the rotating body 11. In other words, the crank shaft 21 and the rotating body 11 can be rotated relative to each other.

When the rotating body 11 is rotated to the right (left) by an angle $\theta_2$ as shown in Fig. 2, axial line Oc of the crank shaft 21 apparently approaches to the basic axial line Om. The overall eccentricity E' in this case is turned to the eccentricity $e_1$' of the eccentric element 23 with apparently reduced eccentricity $e_2$, and the stroke is ST2.

When the connecting means 30 is operated again after the adjustment, i.e. when the cylinder 33L is released and the cylinder 33R is pushed, the crank shaft 21 moves leftwards. Gear unit 32 engages with internal gear 32, and both components 11 and 21 are in locked state.

Therefore, if pinion shaft 2 is rotated, and the rotating body 11 as main gear is rotated thereafter, pressure operation can be performed with the stroke E' ($= e_1' + e_2$) after the adjustment.

As described above, the present embodiment comprises a crank shaft 21 provided with an eccentric element 23, a pair of rotating bodies 11 having eccentric holes 12, and connecting means 30, and it is characterized in that the crank shaft 21 is relatively rotatably and axially displaceably engaged in the eccentric hole 12, and that connecting means 30 is designed in such manner that crank shaft 21 and rotating bodies 11 can be released and locked. Therefore, a new crank driving device is offered, which is in compact size and is easy to handle and which overcomes the disadvantages such as large-size multi-layer eccentric structure, difficult adjustment, excessive peripheral speed, etc.

The engagement of the crank shaft 21 and the connecting rod 5 is exactly the same as the structure of the so-called crank press, and the rotating bodies are also designed as the so-called main gear in the conventional type equipment, and this contributes to compact design of the equipment.

Because it is designed in serial type eccentric structure different from conventional multi-layer eccentric structure, the eccentricity E can be adjusted quickly and easily from either the side or outside of the crown chamber CRR.

Further, fine adjustment of the eccentricity E can be achieved according to the number of teeth of gear unit 31, which constitutes the connecting means 30, and this results in wide adaptability.

Because the eccentricity E is adjustable by displacing the crank shaft 21 in lateral direction, the operation is easy to perform and can be easily automated.

## Claims

1. A crank driving device for press, comprising:
    a crank shaft with eccentric element engaged with upper end of a connecting rod, a pair of rotating bodies supported synchronously and movably on basis axial line and having eccentric holes being eccentric to basic axial line, and connecting means;
    characterized in that each end of said crank shaft is rotatably and displaceably engaged in axial direction in each of the eccentric holes of said rotating bodies, and that said connecting means is arranged in such manner that relative rotation of crank shaft and rotating body is allowed when eccentricity is adjusted and relative angle between crank shaft and rotating body is maintained at constant value after the eccentricity adjustment.

2. A crank driving device for press according to Claim 1, wherein said connecting means comprises an internal gear fixed on one of the rotating bodies, an external gear fixed on shaft end of crank shaft, and cylinder unit to move crank shaft in axial direction.

3. A crank driving device for press according to Claim 2, wherein the gear ratio of the internal gear fixed on one of the rotating bodies and the external gear fixed on shaft end of the crank shaft is 1:1.

4. A crank driving device for press according to Claim 3, wherein the rigidity of one of the rotating bodies where said internal gear is fixed is higher than the rigidity of the other rotating body.

5. A crank driving device for press according to Claim 1, wherein the axial dimension of the eccentric member of said crank shaft is longer than the axial dimension of the upper end engaged in the eccentric element of the connecting rod.

# FIG. 1

# FIG.2

# FIG.3

# FIG.4